# EUROPEAN PATENT APPLICATION

(11) **EP 4 568 065 A1**
(43) Date of publication of application: **11.06.2025**
(21) Application number: 24218491.9
(22) Date of filing: 09.12.2024
(51) Int. Cl.: H02K 1/18, H02K 3/52, H02K 7/14, H02K 9/06, H02K 21/16, H02K 5/20, H02K 5/24, H02K 11/33

(54) **BRUSHLESS MOTOR IN POWER TOOL**

(30) Priority: 08.12.2023 US 202363607614 P; 05.12.2024 US 202418969902
(71) Applicant: Black & Decker, Inc., New Britain, CT 06053 (US)
(72) Inventor: JEFFERIES, Dustin W., Baltimore, 21229 (US); SMITH, David J., Columbia, 21045 (US); RYDIN, Marcus E. E., 582 47 Linkoping (SE); AYERS, Justin H., Jarrettsville, 20184 (US)
(74) Representative: SBD IPAdmin

(57) **Abstract**

An electric motor is provided, including a motor housing having a substantially cylindrical body; a stator disposed within the motor housing, the stator including a stator core, a first end insulator mounted to one end of the stator core, a second end insulator mounted to another end of the stator core, and stator windings wound around the stator core and the first and second end insulators; and a rotor rotatably received within the stator and including a rotor shaft extending along a longitudinal axis and a plurality of permanent magnets. The motor housing is fastened to the first end insulator via at least one fastener received into a threaded opening of the first end insulator. The second end insulator is not fastened directly to the motor housing so as to be axially unconstrained relative to the motor housing to accommodate for axial tolerances associated with the stator.

## Description

This disclosure relates to a brushless motor assembly for a rotary tool, and particularly to a compact brushless motor assembly for use in a gripping portion of a body grip power tool.

Brushless direct-current (DC) motors have been used in power tool applications for over a decade. While BLDC motors provide many size and power output advantages over universal and permanent magnet DC motors, it is always desired to manufacture more compact motors while providing the same or higher power output. While known brushless DC motor designs are capable of outputting high power from a DC power source such as a battery pack to perform many power tool applications such as grinding, cutting, drilling, etc., such motors typically have a diameter greater than or equal to 40mm, making them unsuitable for placement in a gripping handle of a power tool.

US Patent No. 8,816,544 is an example of a brushless motor for a grinding tool sized to be received within a gripping portion of the tool. However, this motor uses an alternating-current (AC) power source and is incapable of producing the same output levels from a smaller-voltage DC power source. Further, the motor utilizes a segmented stator design to form the stator windings, which is expensive and prone to high noise and vibration in high torque applications. What is needed is a brushless DC motor formed of a single-piece stator and including a small diameter, yet capable of producing a high power output needed for power tool applications.

A problem that motor and power tool design engineers have to be mindful of is how the accumulative effect of small variations in manufacturing tolerances of the motor components may impact assembly of the motor inside the power tool. Stack-up tolerances can be particularly problematic with manufacturing and assembly of a compact and high density brushless motor in small spaces, such as a gripping portion of a tool.

An aspect of the present invention provides an electric motor according to Claim 1 of the appended claims.

Another aspect of the invention provides a power tool according to Claim 14.

Preferred, and other optional, features of the invention are described and defined in the dependent claims.

It is to be expressly understood that any feature, including any preferred or other optional feature, of any aspect or embodiment of the invention or disclosure, may be a feature, including a preferred or other optional feature, of any other aspect or embodiment of the invention or disclosure.

According to another aspect of the invention, a motor is provided comprising: a motor housing having a substantially cylindrical body and at least one open end; a stator disposed within the motor housing, the stator including a stator core, a first end insulator mounted to one end of the stator core, a second end insulator mounted to another end of the stator core, and a plurality of stator windings wound around the stator core and the first and second end insulators; and a rotor rotatably received within the stator and including a rotor shaft extending along a longitudinal axis and a plurality of permanent magnets. In an embodiment, the motor housing is fastened to the first end insulator via at least one fastener received into a threaded opening of the first end insulator, and the second end insulator is not fastened directly to the motor housing so as to be floating along the axial direction and spaced apart by an axial gap from another component located within the motor housing to absorb axial tolerances associated with the stator.

In an embodiment, another component is a fan baffle provided adjacent a motor fan and including a plurality of threaded openings.

In an embodiment, the other component is fastened to a tool housing provided outside the motor housing, wherein the motor housing includes at least one opening for passage of a fastener from the tool housing to the other component.

According to another aspect of the invention, a power tool is provided comprising: a tool housing; and a motor disposed within the tool housing. The motor comprises: a motor housing having a substantially cylindrical body and at least one open end; a stator disposed within the motor housing, the stator including a stator core, a first end insulator mounted to one end of the stator core, a second end insulator mounted to another end of the stator core, and a plurality of stator windings wound around the stator core and the first and second end insulators; and a rotor rotatably received within the stator and including a rotor shaft extending along a longitudinal axis and a plurality of permanent magnets. In an embodiment, the motor housing is fastened to the first end insulator via at least one fastener via a first fastener received into a threaded opening of the first end insulator, and another component of the motor is fastened to the tool housing via a second fastener received into a threaded opening of the another component and passing through an opening of the motor housing.

According to another aspect of the invention, a motor is provided comprising: a motor housing having a substantially cylindrical body and at least one open end; a stator disposed within the motor housing, the stator including a stator core, an end insulator mounted to one end of the stator core, and a plurality of stator windings wound around the stator core and the end insulators; and a rotor rotatably received within the stator and including a rotor shaft extending along a longitudinal axis and a plurality of permanent magnets. The end insulator includes a rigid body having an outer diameter that is smaller than a diameter of an inner surface of the motor housing, further comprising an elastic element made of elastically deformable material at least partially provided between the rigid body of the end insulator and the inner surface of the motor housing to absorb radial tolerances associated with the stator.

In an embodiment, the rigid body of the end insulator comprises a plurality of side openings, and wherein the elastic element comprises a plurality of bumpers being made of elastically deformable material partially received into the plurality of side openings in deformable engagement with the inner surface of the motor housing.

According to another aspect of the invention, a motor is provided comprising: a motor housing having a substantially cylindrical body and at least one open end; a stator disposed within the motor housing, the stator including a stator core, an end insulator mounted to one end of the stator core, and a plurality of stator windings wound around the stator core and the end insulators; and a rotor rotatably received within the stator and including a rotor shaft extending along a longitudinal axis and a plurality of permanent magnets. The end insulator includes an outer body, and a plurality of teeth extending radially inwardly from the outer body forming a plurality of teeth tips, corresponding to a shape of the stator core. The end insulator further includes a plurality of pins projecting from the plurality of teeth proximate the plurality of teeth tips arranged to be received into a plurality of holes correspondingly provide in the stator core. In an embodiment, the diameter of the stator core is smaller than or equal to 34 mm.

According to another aspect of the invention, a motor is provided comprising: a stator including a stator core, a plurality of stator windings, and a routing insulator provided at an axial end of the stator core to electrically insulate the stator core from the plurality of stator windings; a rotor rotatably received within the stator and including a rotor shaft extending along a longitudinal axis and a plurality of permanent magnets; and a plurality of stator terminals supported by the routing insulator and extending away from the stator, each stator terminal including a main body, a tang portion folded over the main body and receiving a portion of a magnet wire therein to make an electrical connection with at least one of the stator windings, and a terminal pin projecting axially away from the stator core. In an embodiment, the routing insulator includes a wire guide portion having rounded members forming a recess there between axially aligned with the tang portion, the rounded members being configured to guide the magnet wire into contact with the tang portion.

The drawings described herein are for illustration purposes only and are not intended to limit the scope of this disclosure.
Fig. 1 depicts a perspective view of a power tool with a front housing half removed including a brushless DC (BLDC) motor, according to an embodiment;
Fig. 2 depicts a partial cross-sectional view of the power tool, according to an embodiment;
Fig. 3 depicts a partial exploded view of the motor and a gear case of the power tool, according to an embodiment;
Fig. 4 depicts a partial perspective view of a stator assembly and a motor can of the BLDC motor, according to an embodiment;
Fig. 5 depicts a partial perspective view of the stator assembly received and fastened within the motor can, according to an embodiment;
Fig. 6 depicts a perspective view of a fan baffle, according to an embodiment;
Fig. 7 depicts a partial perspective view showing the fan baffle located the front end of the motor and a motor fan, according to an embodiment;
Fig. 8 depicts a perspective view of the power tool assembly process using fasteners received from the tool housing, according to an embodiment;
Figs. 9A and 9B depicts a radial-cross-sectioned view of the power tool showing the fasteners received into a fan baffle, according to an embodiment;
Fig. 10 depicts a partial perspective view of an end of the stator including an end insulator and elastically deformable bumpers mounted on the end insulator, according to an embodiment;
Fig. 11 depicts a partial perspective view of the motor can with the end insulator and elastically deformable bumpers located therein, according to an embodiment;
Fig. 12A depicts a perspective view of the stator assembly including elastically deformable bumpers mounted on the front and rear end insulators, according to an embodiment;
Fig. 12B depicts a partially exploded perspective view of the stator assembly including the bumpers shown apart from the rear end insulator, according to an embodiment;
Fig. 13A depicts a cross-sectional view of the motor without the motor can along a radial plane passing through the rear end insulator, the retaining insert member, the bumpers, and the rear bearing bridge, according to an embodiment;
Fig. 13B depicts a cross-sectional view of the motor including the motor can along the same radial plane, according to an embodiment;
Fig. 13C depicts a partial view of Fig. 13B showing boundary regions on the outer surface of the rear end insulator and the inner surface of the motor can, according to an embodiment;
Fig. 14A depicts a partial perspective view of the end of the stator including an end insulator and an elastically deformable ring mounted on the end insulator, according to an embodiment;
Fig. 14B depicts a partial perspective view of the motor can with the end insulator and the elastically deformable ring located therein, according to an embodiment;
Fig. 15 depicts a rear perspective view of the end insulator of the motor, according to an embodiment;
Fig. 16 depicts an exploded view of the end insulator relative to the stator core, according to an embodiment;
Fig. 17 depicts a partial cross-sectional view of the end insulator mounted on the stator core, according to an embodiment;
Fig. 18 depicts a partial perspective view of the routing insulator including a stator terminal, according to an embodiment;
Fig. 19 depicts another perspective view of the routing insulator and the stator terminal, according to an embodiment;
Fig. 20 depicts a partial perspective view of the routing insulator including a stator terminal 220 similar to Fig. 18, after a tang portion of the stator terminal is pressed in to capture a magnet wire, according to an embodiment; and
Fig. 21 depicts a frontal view of the routing insulator and the stator terminal after the tang portion is pressed in, according to an embodiment

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

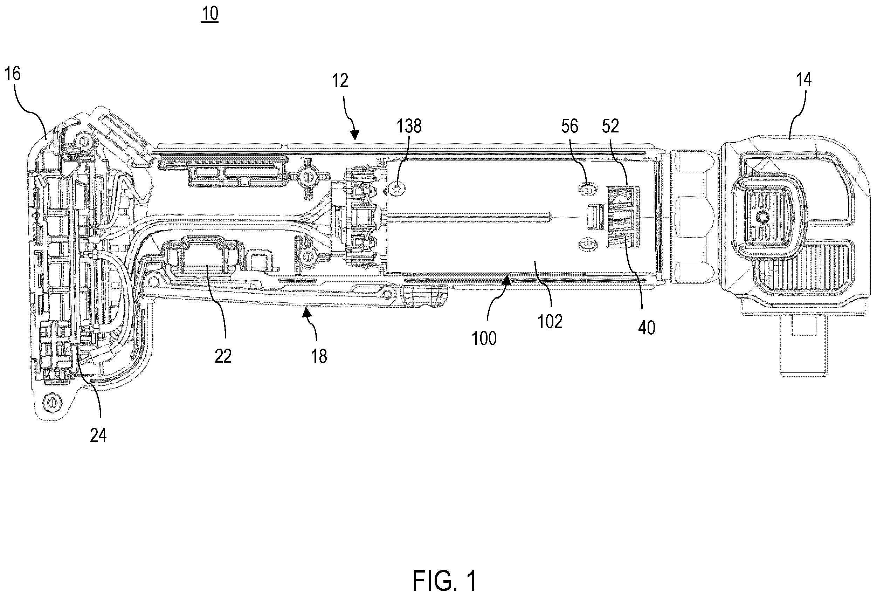

Fig. 1 depicts a perspective view of a power tool 10 including an elongate housing 12 that houses a brushless direct-current (BLDC) motor 100, a gear case 14 mounted forward of the housing 12, and a battery receptacle 16 formed at the foot of the housing 12 opposite the gear case 14. In this view, the housing 12 is made of a pair of clamshells, one of which is removed to expose the BLDC motor 100 and associated components disposed within the housing 12, according to an embodiment.

In an embodiment, battery receptacle 16 is configured to receive a removable and rechargeable power tool battery pack therein. The battery pack, not shown in this figure, may be, for example a lithium-ion battery pack having a nominal voltage of 18V.

In an embodiment, power tool 10 further includes a trigger assembly 18 mounted on the housing 12 and includes a paddle switch engageable by a user and a switch assembly 22 disposed within the housing 12. In an embodiment, switch assembly 22 may include a mechanical contact switch, a logic switch, or a combination thereof, arranged to activate or deactivate supply of power from the battery pack.

In addition, in an embodiment, power tool 10 includes a control module 24, which in this example is disposed near the battery receptacle 16. In an embodiment, control module 24 includes a programmable controller, such as a microcontroller device, not shown in this figure, mounted on a printed circuit board. The controller includes code that controls supply of electric power to the motor according to various criteria, such as load, speed, and power requirements. In an embodiment, control module 24 may further include a series of power switches, also not shown, configured as a three-phase inverter circuit, controlled by the controller for driving the motor 100. Details of the controller and power switcher are beyond the scope of this disclosure. Reference is made, by way of example, to US Patent No. 10,680,494; US Patent No. 10,615,733; and US Patent No. 10,693,344, all of which are incorporated herein by reference in their entireties, as various examples of motor control and drive configurations.

In an embodiment, the power tool 10 is an angle die grinder by way of example, though it should be understood that the principles described herein may be utilized in various other power tools such as a regular angle grinder, a cutout tool, a polisher, a wrench, a drill, an impact driver, a hammer drill, a circular saw, a reciprocating saw, a band saw, a nailer, etc.

In an embodiment, the gear case 14 receives a motor shaft that is rotatable with the motor 100 and includes a series of gears and supports an output spindle driven In an embodiment, the output spindle may be oriented perpendicularly to the motor shaft. In an embodiment, the gear case 14 may additionally include a spindle lock engageable by a user to prevent rotation of the output spindle while the user is mounting a grinding or cutting wheel onto the output spindle. In an embodiment, the gear case 14 may also include a retention flange configured to apply a biasing force to the grinding or cutting wheel for increased security, as described in US Patent Publication No. 2022/0063047, which is incorporated herein by reference in its entirety. In an embodiment a guard 26 may be mounted on a collar portion of the gear case 14 around the grinding or cutting accessory.

In an embodiment, the power tool 10 is designed as a body-grip power tool with the housing 12 being sized to fit into a hand grip of a user with relative ease even in the area around the motor 100. As such, in an embodiment, the housing 12 has a maximum diameter of approximately 35 to 45 mm, preferably approximately 37 to 43 mm, more preferably at most 40 mm, through the entire length of the motor 100.

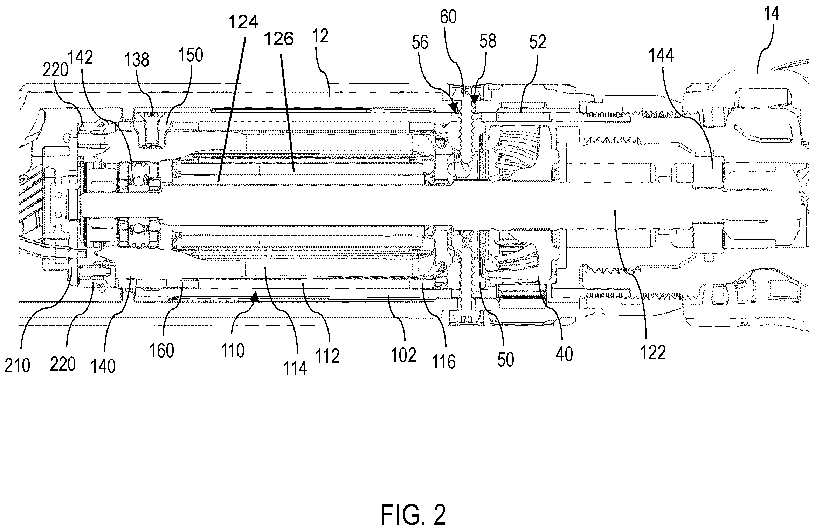

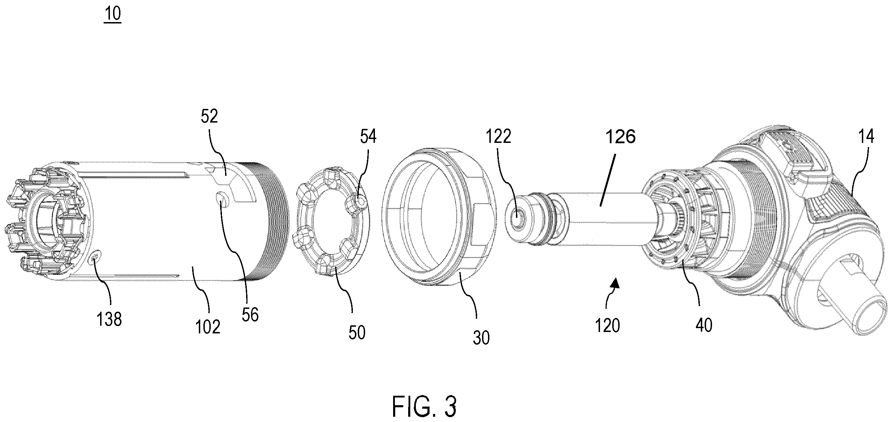

Fig. 2 depicts a partial cross-sectional view of the power tool 10 and the motor 100, according to an embodiment; Fig. 3 depicts a partial exploded view of the motor 100 and the gear case 14, according to an embodiment.

Referring to these figures, in an embodiment, the motor 100 includes a motor housing (or motor can) 102 having a substantially cylindrical body and two open ends that supports the components of the motor 100 described below. In an embodiment, the motor can 102 may be made of steel or other metal to provide a structurally robust and tight tolerance mounting structure for the motor components. A front end of the motor can 102 extends past the front of the housing 12 and has a threaded outer surface, arranged to be coupled to a threaded rear end of the gear case 14 via a threaded collar 30. The motor 100 further includes a stator assembly 110 received into the motor can 102, and a rotor assembly 120 mounted on a rotor shaft 122 and initially coupled to the gear case 14 prior to assembly into the stator assembly 110. The rotor assembly 120 further includes a motor fan 40 mounted on the rotor shaft 122 to generate an airflow through the motor. A fan baffle 50 is also received between the stator assembly 110 and the motor fan 40 to direct the air, heated from the stator assembly 110, radially inward towards the fan inlet region, and then through exhaust vents 52 formed in the motor can 100 and corresponding exhaust vents (not shown) in the tool housing.

In an embodiment, stator assembly 110 is securely received within the inner diameter of the motor can 102. Stator assembly 110 includes a stator core 112, which may be formed of a series of laminated steel members, and a series of stator windings 114 supported by the stator core 112.

In an embodiment, stator assembly 110 further includes a front end insulator 116 and a rear end insulator 160 mounted on opposite axial ends of the stator core 112 to insulate the stator windings from the stator core 112. Each end insulator includes a series of teeth corresponding to the teeth of the stator core 112, and the stator windings are wound around the teeth of the end insulators to avoid direct contact with the metal part of the stator core 112. Reference is made to US Patent No. 10,328,566, which is incorporated herein by reference in its entirety, as an example of a stator end insulator construction.

In an embodiment, rear end insulator 160, which is herein referred to as a routing insulator, has a greater axial length than the front end insulator 116, and it includes features for routing the magnet wire between stator windings and supporting additional components associated with the stator windings. In an embodiment, routing insulator 160 extends beyond the rear axial end of the motor can 102. In addition, stator assembly 110 includes a rear bearing support structure (also referred to as rear bearing bridge) 140 secured to an end of the stator core 112, which securely receives a rear bearing 142 mounted on a rear axial end of the rotor shaft 122 to support the rotor shaft relative to the stator assembly 110. In an embodiment, a front bearing 144 of the rotor shaft 122 is nested within and supported by a portion of the gear case 14.

In an embodiment, the rotor assembly 120 includes one or more rotor core segments 124 mounted on the rotor shaft 122 in series, each rotor core segment 124 supporting a series of permanent magnets 126 or a permanent magnet ring 126 mounted on its outer surface (e.g. the permanent magnets 126 may be provided in the form of a permanent magnet ring 126). In an embodiment, the rotor assembly 120 is disposed within the stator assembly 110. As stator windings 114 are energized in a controlled sequence, the magnetic interaction between the stator windings 114 and the permanent magnets 126 generates torque between the rotor assembly 120 and the stator assembly 110. For details on constructional and operational principles of the stator and the rotor, reference is made to US Patent No. 10,923,989, and US Patent Publication No. 2021/0194320, both of which are incorporated herein by reference in their entireties.

For a more detailed description of the above features and other features of the motor 100 and power tool 10, reference is made to US Patent Publication No. 2022/0247257, which is incorporated herein by reference in its entirety.

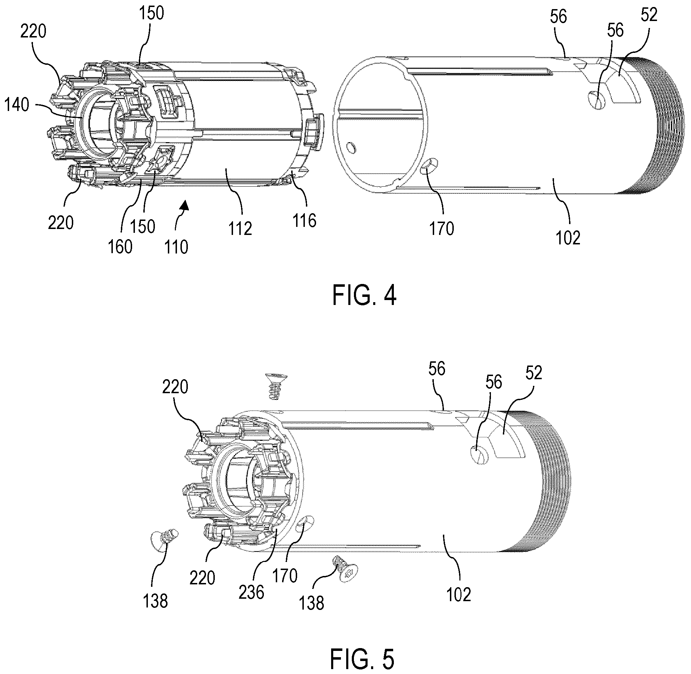

Fig. 4 depicts a partial perspective view of the stator assembly 110 being received through an end of the motor can 102 of the BLDC motor, according to an embodiment. Fig. 5 depicts a partial perspective view of the stator assembly 110 being fastened within the motor can 102, according to an embodiment.

As shown in Figs. 1-5, according to an embodiment, the stator assembly 110 is securely fitted within the motor can 102 and fastened to the motor can 102 via a series of rear fasteners 138. Rear fasteners 138 are radially received through rear openings 170 of the motor can 102 and fastened into retaining insert member 150 of the routing insulator 160. Specifically, routing insulator 160 includes a series of side openings 158 formed in its circumferential body, and the retaining insert members 150 are positioned into at least a subset of the side openings 158 prior to the assembly process. The retaining insert members 150 include threaded openings therein that align with the rear openings 170 of the motor can 102, and the rear fasteners 138 are fastened into the threaded openings. This arrangement is similar to Figs. 36-49 of US Patent Publication No. 2022/0247257.

In a further embodiment of the invention, retaining insert members 150 may be made of elastically deformable material such as hard rubber that resiliently compress under application of force. Further, in an embodiment, the retaining insert members 150 project slightly out of the side openings 158 of the routing insulator 160 (e.g., by approximately 0.2 to 0.8 mm) in the radial direction. This ensures that that outer surfaces of the retaining insert members 150 are in contact with the inner surface of the motor can 102, even if radial stack-up tolerances of the stator assembly cause slight variations in the diameter of the stator in relation to the motor can 102, which would otherwise lead to some vibration of the stator within the motor can 102. If the stator has no stack-up tolerances and fits firmly within the motor can, the retaining insert members 150 are compressed by the motor can 102 to fit fully into the side openings 158 of the routing insulator 160.

In another embodiment, retaining insert members 150 may similarly project slightly out of the side openings 158 of the routing insulator 160 in the radial direction, but the retaining insert members 150 may be made of hard plastic material such as nylon. In this arrangement, the retaining insert members 150 may be resiliently pressed into the inner surface of the motor can 102 during the assembly process while maintaining a small air gap (e.g., 0.2 mm to 0.8 mm) between the outer surface of the routing insulator 160 and the inner surface of the motor can 102. This arrangement may similarly maintain the air gap around the outer surface of the stator core 112 and the inner surface of the motor can 102.

According to an embodiment, the front end of the stator assembly 110 is not fastened into the motor can 102. Rather, the front end of the stator assembly 110 is in a floating state along the axial direction, with a front end surface of the front end insulator 116 being axially spaced-apart (e.g., by approximately 0.5 to 1.5 mm) from other motor components (e.g., in this example, the fan baffle 50), as discussed below in detail. This arrangement accounts for axial stack-up tolerances of the stator, and it ensures that slight variations in the axial length of the stator in relation to the motor can 102 do not complicate the assembly process.

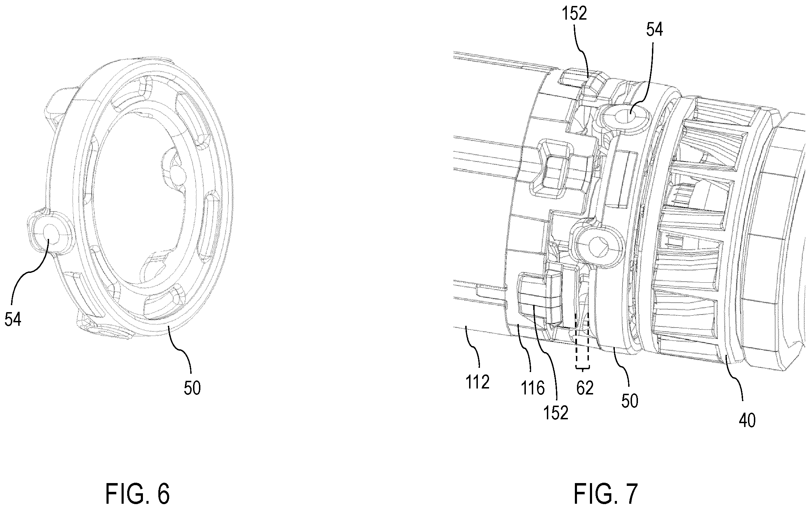

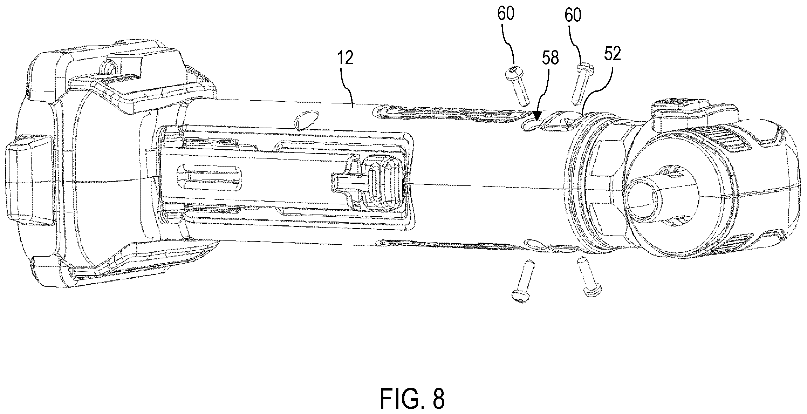

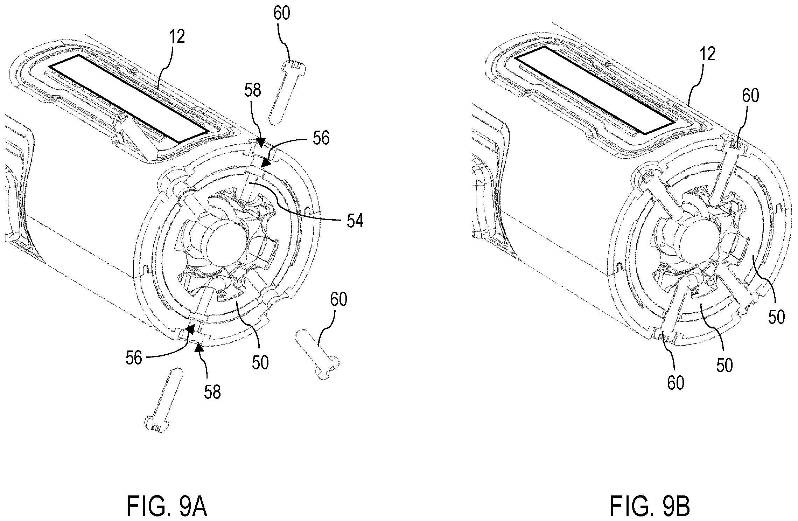

Fig. 6 depicts a perspective view of the fan baffle 50, according to an embodiment. Fig. 7 depicts a partial perspective view showing the fan baffle 50 located the front end of the motor adjacent the motor fan 40, according to an embodiment. Fig. 8 depicts a perspective view of the power tool assembly process using front fasteners 60 received from the tool housing, according to an embodiment. Figs. 9A and 9B depicts a radial-cross-sectioned view of the power tool showing the front fasteners 60 received into the fan baffle 50, according to an embodiment.

As shown in these figures, and with continued reference to Figs. 1-5, fan baffle 50 is disposed between the front end insulator 116 of the stator assembly and the motor fan 40 to direct the heated air radially inwards towards the fan inlet region, and then through exhaust vents 52 formed in the motor can 100 and corresponding exhaust vents (not shown) in the tool housing. The fan 40 includes fan blades 42 that generate airflow through the motor around the rotor shaft. The fan baffle 50 includes a disc-shaped body that faces the fan blades 42 to re-direct the air, heated from the stator assembly 110, radially inward towards the fan inlet region (i.e., a central area of the fan). Furthermore, the fan baffle 50 cooperates with the fan blades 42 to expel the air in a substantially radial direction through exhaust vents 52 formed in the motor can 100 and corresponding exhaust vents (not shown) in the tool housing.

In an embodiment, the outer diameter of the fan baffle 50 is sized to be fittingly received into the motor can 102. The fan 40 is similarly sized to be received inside the motor can 102 in alignment with the exhaust vents 52. Further, in an embodiment, fan baffle 50 includes a series of threaded openings 54 formed in its outer circumferential surface. Threaded openings 54 align with openings 56 of the motor can 102 formed adjacent the exhaust vents 52, and with corresponding through-holes 58 formed in the housing 12 of the power tool. Front fasteners 60 are received from outside the housing 12, through through-holes 58 and openings 56, into threaded openings 54 of the fan baffle 50. Accordingly, front fasteners 60 secure the motor can 102 and the fan baffle 50 to the tool housing 12. Through-holes 58 and openings 56 are positioned to ensure that an axial gap 62 (e.g., approximately (0.5 to 1.5 mm) is maintained between the front end of the front end insulator 116 and the fan baffle 50. In an embodiment, the axial gap 62 may be an air gap, though in some embodiments, flexible compliant material such as rubber may occupy the axial gap 62 such that there is flexible physical contact with the front end insulator 116. This axial gap 62, as described above, accounts for axial stack-up tolerances of the stator and ensures that slight variations in the axial length of the stator in relation to the motor can 102 do not interfere with the assembly process.

The above-described embodiments provide a structure whereby the stator is securely held within the motor can 102 via rear fasteners 138 provided at the end of the stator such that the front end of the stator is axially unconstrained within the motor can 102. Further, the motor can 102 is axially and rotationally fixed within the tool housing 12 via front fasteners 138 that are fastened to a component of the motor that is spaced apart from the stator (e.g., the fan baffle 40).

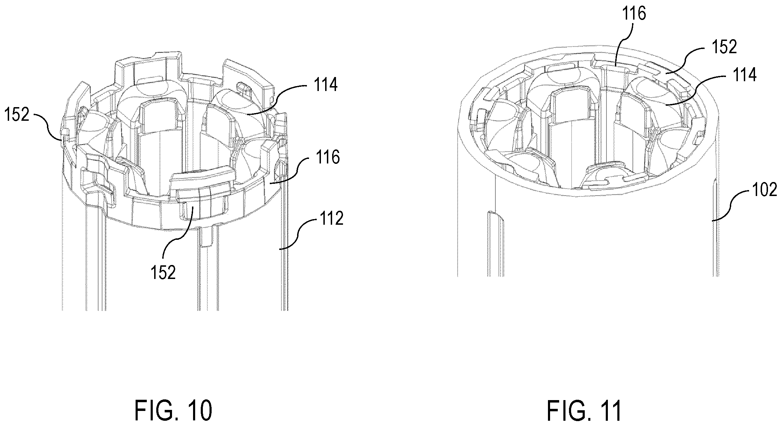

Fig. 10 depicts a partial perspective view of an end of the stator 110 including the front end insulator 116, according to an embodiment. Fig. 11 depicts a partial perspective view of the motor can 102 with the end insulator 116 located therein, according to an embodiment.

As shown in these figures, in an embodiment, front end insulator 116 includes a series of side openings formed in its circumferential body. In an embodiment, a series of elastically deformable bumpers 152 are positioned into at least a subset of the side openings prior to the assembly process. Similar to retaining insert members 150 described above, bumpers 152 may be made of elastically deformable material such as rubber that resiliently compress under application of force. Alternatively, bumpers 152 may be made of hard plastic material such as nylon. Further, the bumpers 152 project slightly out of the peripheral profile of the side openings of the front end insulator 116 (e.g., by approximately 0.2 to 0.8 mm) in the radial direction. This ensures that that outer surfaces of the bumpers 152 are resiliently in contact with the inner surface of the motor can 102, even if radial stack-up tolerances of the stator assembly cause slight variations in the diameter of the stator in relation to the motor can 102, which would otherwise lead to some vibration of the stator within the motor can 102. In an embodiment, three bumpers 152 are provided at 120 degrees apart, to ensure full circumferential support for the stator 110 relative to the motor can 102.

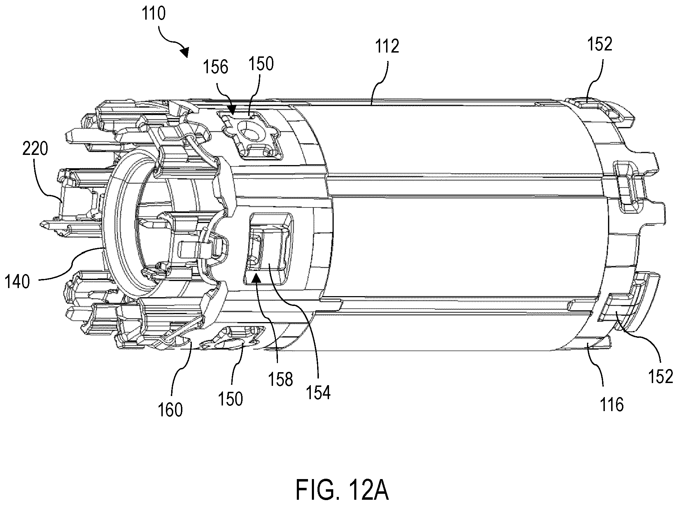

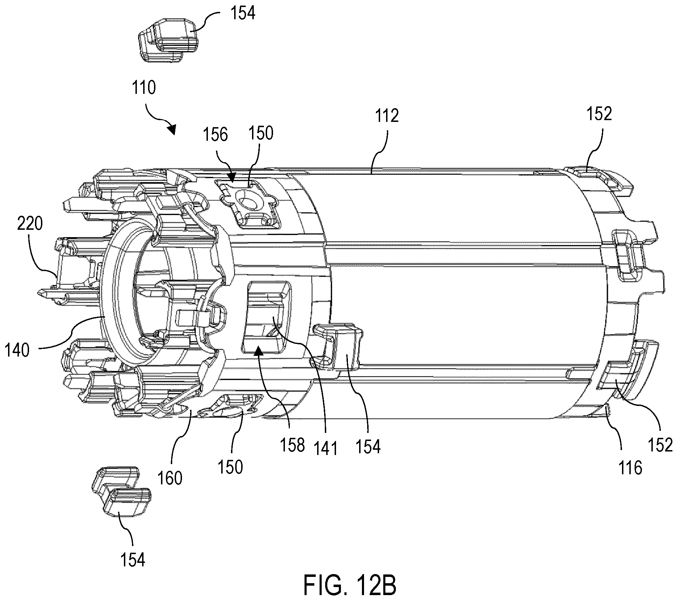

Fig. 12A depicts a perspective view of the stator assembly 110 including the rear end insulator 160 provided with retaining insert member 150 and bumpers 154, according to an embodiment. Fig. 12B depicts a partially exploded perspective view of the stator assembly 110 including the bumpers 154 shown apart from the rear end insulator 160, according to an embodiment.

In an embodiment, in addition to retaining insert member 150, the rear end insulator 160 may include bumpers 154 received through a subset of its side openings 158. In an embodiment, where the rear end insulator 160 includes six side openings 158, three bumpers 154 and three retaining insert member 150 may be alternatingly provided. Similar to bumpers 152 described above, bumpers 154 may project slightly out of the peripheral profile of the side openings 158 of the rear end insulator 160 (e.g., by approximately 0.2 to 0.8 mm) in the radial direction to account for the radial stack-up tolerances of the stator. Further, similar to bumpers 152, bumpers 154 may be made of elastically deformable material such as rubber that resiliently compress under application of force. Alternatively, bumpers 154 may be made of rigid plastic material such as nylon, which would allow the stator assembly 110 including the rear end insulator 160 to be resiliently pressed into the body of the motor can 102 with force. In an embodiment, retaining insert members 150 may be made of rigid material such as plastic or metal more effective structural support for the rear fasteners 138. Further, in an embodiment, retaining insert members 150 may be circumferentially aligned with the outer surface of the rear end insulator 160.

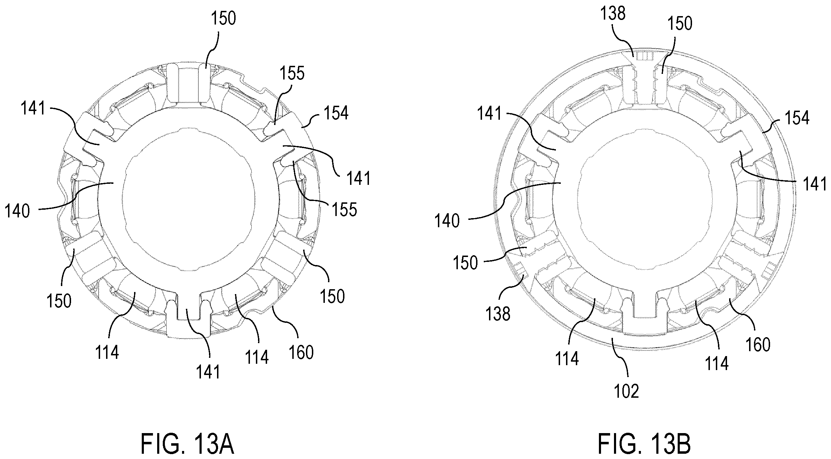

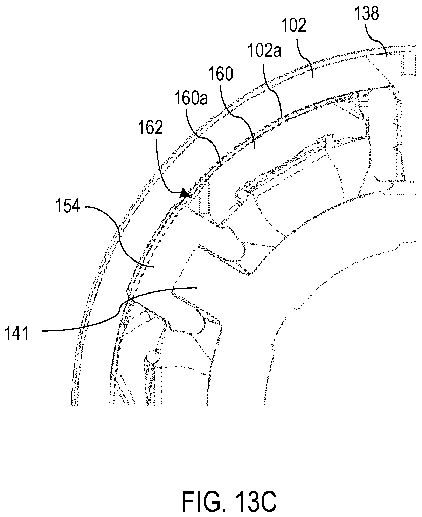

Fig. 13A depicts a cross-sectional view of the motor 100 without the motor can 102 along a radial plane passing through the rear end insulator 160, the retaining insert member 150, the bumpers 154, and the rear bearing bridge 140, according to an embodiment. Fig. 13B depicts a cross-sectional view of the motor 100 including the motor can 102 along the same radial plane, according to an embodiment. Fig. 13C depicts a partial view of Fig. 13B showing boundary regions on the outer surface of the rear end insulator 160 and the inner surface of the motor can 102, according to an embodiment.

As shown in Figs. 12B-13C, according to an embodiment, the rear bearing bridge 140 includes a main cylindrical body that forms a bearing pocket for receiving the rear bearing 142 (not shown), and a series of axial post inserts 141 that project radially outwardly from the outer circumference of the main cylindrical body and extend axially in the direction of the stator core to be slidingly received within the stator slots formed between the stator windings 114. The structure of the rear bearing bridge 140 is described in detail in US Patent Publication No. 2022/0247257 (e.g., Fig. 36) and is not described here in detail. As described above and in detail in US Patent Publication No. 2022/0247257, the retaining insert members 150 are mounted in engagement with a first subset of the axial post inserts 141. After the stator assembly 110 is mounted into the motor can 102, fasteners 138 are fastened into the retaining insert members 150 to secure the motor can 102 and the stator assembly 110 together.

In an embodiment, the bumpers 154 are mounted in engagement with a second subset of the axial post inserts 141 in an alternating fashion relative to the retaining insert members 150. In an embodiment, each bumper 154 includes a U-shaped profile along the radial plane, with two legs 155 that partially capture the sides of the respective axial post insert 141 when the bumper 154 is received radially through the corresponding side opening 158 of the rear end insulator 160. An inner surface of the bumper 154 sits against an outer edge of the respective axial post insert 141 in the fully assembly state. An outer surface of the bumper 154 has a curved profile that radially projects slightly outwardly relative to the outer surface of the rear end insulator 160 in the fully assembled state.

In an embodiment, as shown in Fig. 13C, the outer surface of the rear end insulator 160 forms a first boundary region 160a with a first radius, and the inner surface of the motor can 102 forms a second boundary region 102a with a second radius that is slightly larger than the first diameter. As the bumpers 154 are pressed into the motor can 102 during the assembly process, engagement of the bumpers 154 with the inner surface of the motor can 102 maintain an airgap 162 formed between two boundary regions that circumferentially extends between the rear end insulator 160 and the motor can 102. This air gap 162 similarly extends around the body of the stator core 112, which has the same diameter as the rear end insulator 160. In an embodiment, the air gap 162 has a thickness (in the radial direction) that is in the range of approximately 0.3 mm to 1.3 mm. This arrangement allows for the stator assembly 110 to be flexibly and/or securely held within the motor can 102 while accounting for any radial stack-up tolerances between the stator components and the motor can 102. Further, in some embodiments, the air gap 162 may allow flow of cooling air in the area between the stator core 112 and the motor can 102 to improve thermal performance of the motor 100.

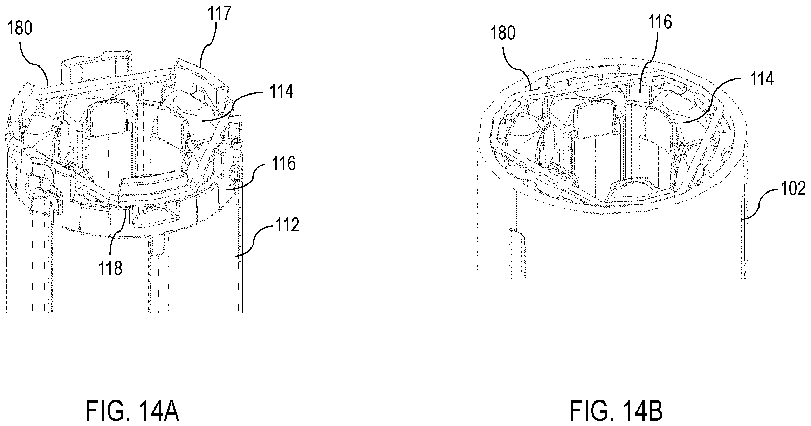

Fig. 14A depicts a partial perspective view of the end of the stator including the front end insulator 116 and an elastically deformable ring 180 mounted on the front end insulator 116, according to an embodiment. Fig. 14B depicts a partial perspective view of the motor can 102 with the front end insulator and the elastically deformable ring located 180 therein, according to an embodiment.

In an embodiment, the end insulators (of which the front end insulator 116 is depicted here by way of example) may be secured within the motor can 102 via the ring 180 instead of discrete elastically deformable bumpers described above. In an embodiment, the ring 180 may be mounted around the outer circumference of the end insulator. In particular, the end insulator may include an annular recess that partially receives the ring 180 therein, thus allowing the ring 180 to project slightly (e.g., by approximately 0.2 to 0.8 mm) away from the outer surface of the end insulator. In an embodiment, as shown in Figs. 13 and 14, axial posts 117 extending from the front end insulator 116 include outer recessed channel 118 above the main body of the end insulator, with the recessed channels being sized to partially receive the ring 180 therein. The recessed channels 118 in this example are formed discretely in three of the axial posts 117 at 120 degrees apart, which allows the ring 180 to pass around three of the axial posts 117.

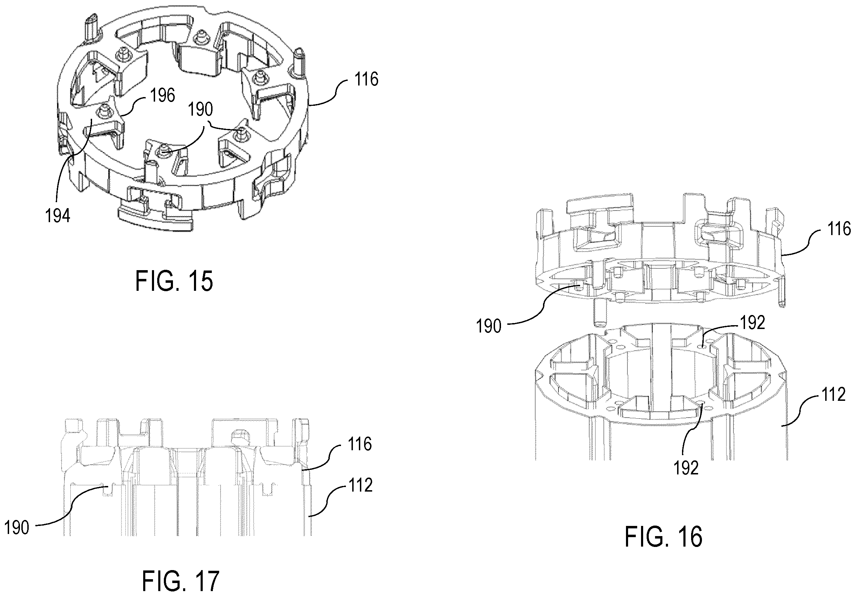

Another aspect of the disclosure is described with reference to Figs. 15-17.

Fig. 15 depicts a rear perspective view of the front end insulator 116, according to an embodiment. Fig. 16 depicts an exploded view of the front end insulator 116 relative to the stator core 112, according to an embodiment. Fig. 17 depicts a partial cross-sectional view of the front end insulator 116 mounted on the stator core 112, according to an embodiment.

Due to the small diameter of the stator 110, the lateral thicknesses of the stator teeth, the material required to survive operating temperatures, and the corresponding lateral thicknesses of the teeth on the end insulators are relatively small in comparison to higher-diameter stators commonly used in power tool applications. It has been seen that during the winding process, due to the small lateral thicknesses of the end insulator teeth, the end insulator teeth are unable to physically withstand the stress applied on the teeth of the end insulators, sometimes causing the end insulator teeth to bend into the stator slots or break completely.

To overcome this problem, in an embodiment, as shown in Figs. 15-17, the end insulators (of which the front end insulator 116 is depicted here by way of example) may be provided with a series of pins 190 projecting from a surface thereof facing the stator core 112. The stator core 112 is similarly provided with a series of holes 192 sized to fittingly receive the pins 190 therein. In an embodiment, holes 192 and pins 190 are provided in one or more of the inwardly-projecting stator teeth of the stator core 112 and the corresponding teeth of the front end insulator 116. In an embodiment, the pins 190 are provided substantially centric to the end insulator teeth 194 in the lateral direction of the teeth and close to tooth tips 196 in the radial direction. Engagement of pins 190 and holes 192 ensures that the end insulator is rotationally fixed to the stator core prior to the winding process of the stator windings and that the stress applied to the end insulator teeth 194 is transferred to the stator core and does not cause the end insulator teeth 194 to bend or break.

In an embodiment, where the stator core 112 is made of a series of steel lamination members (i.e., a lamination stack), one or two of the lamination members located at an axial end of the stator core 112 are formed with the holes 192 and the rest are formed without the holes 192.

In an embodiment, a height of the pins is approximately 0.5 mm to 1.5 mm.

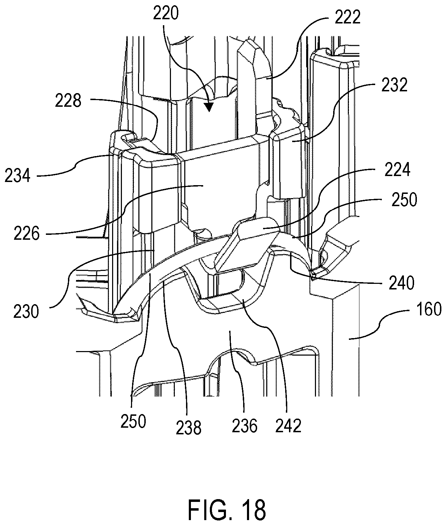

Another aspect of the disclosure is described here. As shown in Figs. 2-5, routing insulator 160 supports a series of stator terminals 220 projecting along the axial direction away from the stator assembly 110. In an embodiment, a circuit board 210 is mounted on the rear end of the routing insulator 160 in electrical contact with the stator terminals 220. Circuit board 210 is described in detail in US Patent Publication No. 2022/0247257, which is incorporated herein by reference in its entirety, and is used to provide interconnections between the stator windings. US Patent Publication No. 2022/0247257 also describes various configurations and designs of the stator terminals and the routing insulator support structure for supporting the stator terminals. This disclosure describes an improved embodiment of stator terminals 220, and the routing insulator 160 structure for supporting the stator terminals 220, as described below with reference to Figs. 18A-20.

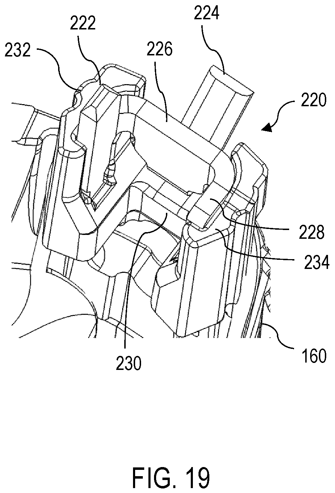

Fig. 18 depicts a partial perspective view of the routing insulator 160 including a stator terminal 220, according to an embodiment. Fig. 19 depicts another perspective view of the routing insulator 160 and the stator terminal 220, according to an embodiment.

In an embodiment, each stator terminal 220 includes a main body 226 having a substantially planar or semi-arcuate profile; a tang portion 224 that extends from a lower side of the main body 226 (i.e., the side closer to the stator core) and is folded over the main body 226 at an angle of approximately 30 to 60 degrees; and two side portions 228 that extend inwardly from the sides of the main body 226. A terminal pin 222 project axially away from one of the side portions 228 for coupling to the circuit board. A cross-over portion 250 of the magnet wire that forms the stator windings 114 described above passes through a lower loop formed by the tang portion 224 (as shown) prior to the tang portion 224 being pressed in against the main body 226. Specifically, a continuous magnet wire is used to successively form the stator windings 114, and after the completion of the winding of one stator winding 11, the cross-over portion 250 of the magnet wire is passed through the tang portion 224 prior to the winding of the next stator winding 114.

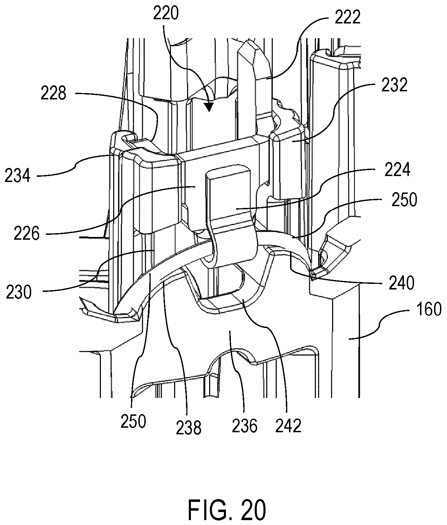

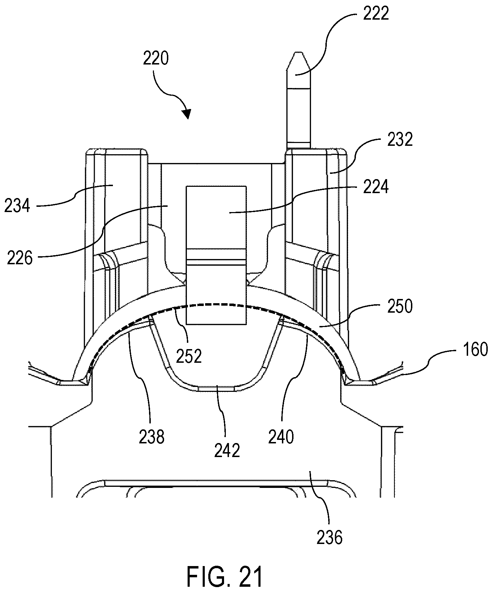

Fig. 20 depicts a partial perspective view of the routing insulator 160 including a stator terminal 220 similar to Fig. 18, after the tang portion 224 is pressed in against the main body 226 to capture the magnet wire, according to an embodiment. Fig. 21 depicts a frontal view of the routing insulator 160 and the stator terminal 220 after the tang portion 224 is pressed in, according to an embodiment. As shown here, when the tang portion 224 is pressed in against the main body 226, it captures the cross-over portion 250 of the magnet wire at a lower portion of the tang portion 224 at a location that is lower than a substantial part of the main body 226 and in electric contact with the main body 226. In an embodiment, the cross-over portion 250 may be stripped, e.g., via laser stripping, and coupled, e.g., via welding or soldering, to the tang portion 224.

As shown in Figs. 20-21, and with continued reference to Figs. 18-19, in an embodiment, the routing insulator 160 includes a series of support posts 230 arranged to structurally hold and support the stator terminals 220. In an embodiment, each support post 230 includes support arms 232 and 234 that securely receive the side portions 228 of the stator terminal 220. In an embodiment, each support post 230 is located radially inward of the outer circumferential surface of the routing insulator 160 to ensure that the outer bodies of the tang portions 224 (after they are pressed in against the main bodies 226) are located within a circumferential profile of the routing insulator 160.

In an embodiment, in addition, the routing insulator 160 includes a wire guide portion 236 formed at its rear end surface located radially outward of each support post 230. In an embodiment, the wire guide portion 236 includes a rounded profile formed by two end surfaces 238 and 240 with a recess 242 formed therebetween. In an embodiment, a lower end of the tang portion 224 is located at least slightly within the recess 242. End surfaces 238 and 240 are rounded at least partially along an arcuate profile 252, which passes through the tang portion 224. This arrangement allows the end surfaces 238 and 240 to guide the cross-over portion 250 of the magnet wire directly in contact with the inner loop of the tang portion 224. In an embodiment, the inner loop of the tang portion 224 is circularly aligned with and co-centric with the end surfaces 238 and 240 along the arcuate profile 252 to ensure that the cross-over portion 250 maintains contact with both end surfaces 238 and 240 and the inner loop of the tang portion 224. In an embodiment, after the tang portion 224 is pressed in against the main body 226 (and in an embodiment, welded or soldered to the main body 226), it does not radially project past the outer surface of the wire guide portion 236.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Various aspects and embodiments of the present disclosure and invention are summarized in the subsequent list of numbered clauses. In the following, further features, characteristics, and exemplary technical solutions of the present disclosure will be described in terms of clauses that may be optionally claimed in any combination. Applicant of this disclosure reserves the right to pursue any of the following embodiments, as recited below or in combination with any features of this disclosure previously described, in one or more divisional patent applications.
1. An electric motor comprising: a motor housing having a substantially cylindrical body; a stator disposed within the motor housing, the stator including a stator core, a first end insulator mounted to one end of the stator core, a second end insulator mounted to another end of the stator core, and a plurality of stator windings wound around the stator core and the first and second end insulators; and a rotor rotatably received within the stator and including a rotor shaft extending along a longitudinal axis and also including a plurality of permanent magnets, preferably wherein the motor housing is fastened to the first end insulator via at least one fastener received into a threaded opening of the first end insulator, and preferably wherein the second end insulator is not fastened directly to the motor housing so as to be unconstrained along the longitudinal axis relative to the motor housing to accommodate for axial tolerances associated with the stator.
2. The electric motor of clause 1, wherein the second end insulator is spaced apart from another component fixedly located within the motor housing by an axial gap.
3. The electric motor of clause 2, further comprising a flexible compliant member located within the axial gap.
4. The electric motor of one of clauses 1 or 2, further comprising a circuit board mounted on a rear portion of the motor housing and electrically coupled to the plurality of stator windings, wherein the first end insulator is located proximate the circuit board.
5. The electric motor of one of clauses 1-4, further comprising a motor fan mounted on the rotor shaft to rotate with the rotor and generate an airflow through the motor housing, and preferably a fan baffle provided between the stator and the motor fan to guide the airflow towards a central portion of the motor fan, preferably wherein the fan baffle preferably is axially fixed relative to the motor housing and the second end insulator is axially spaced from the fan baffle.
6. The electric motor of clause 5, wherein the motor housing comprises at least one opening aligned with the fan baffle, preferably wherein the fan baffle is axially fixed relative to the motor housing via a fixing member received through the at least one opening.
7. The electric motor of clause 6, wherein the fan baffle comprises at least one threaded opening and the at least one fixing member comprises at least one fastener fastened into the at least one threaded opening.
8. The electric motor of one of clauses 6 or 7, wherein the motor fan is disposed within the motor housing, and preferably wherein the motor housing comprises at least one exhaust vent formed therein proximate the at least one opening and radially aligned with the motor fan.
9. The electric motor of one of clauses 1-8, wherein the axial gap is in the range of approximately 0.5 mm to 1.5 mm.
10. The electric motor of one of clauses 1-9, further comprising an elastically deformable member mounted between at least a portion of an outer surface of the second end insulator and an inner surface of the motor housing to resiliently support the second end insulator relative to the motor housing.
11. A power tool comprising: a tool housing; an electric motor disposed within the tool housing, wherein the electric motor comprises: a motor housing having a substantially cylindrical body; a stator disposed within the motor housing, the stator including a stator core, a first end insulator mounted to one end of the stator core, a second end insulator mounted to another end of the stator core, and a plurality of stator windings wound around the stator core and the first and second end insulators; and a rotor rotatably received within the stator and including a rotor shaft extending along a longitudinal axis and also including a plurality of permanent magnets, preferably wherein the motor housing is fastened to the first end insulator via at least one fastener received into a threaded opening of the first end insulator, and preferably wherein the second end insulator is not fastened directly to the motor housing so as to be unconstrained along the longitudinal axis relative to the motor housing to accommodate for axial tolerances associated with the stator.
12. The power tool of clause 11, wherein the second end insulator is spaced apart from another component fixedly located within the motor housing by an axial gap.
13. The electric motor of clause 12, further comprising a flexible compliant member located within the axial gap.
14. The power tool of one of clauses 11-13, wherein the electric motor further comprises a motor fan mounted on the rotor shaft to rotate with the rotor and generate an airflow through the motor housing, and preferably a fan baffle provided between the stator and the motor fan to guide the airflow towards a central portion of the motor fan, preferably wherein the fan baffle is axially fixed relative to the motor housing and the second end insulator is axially spaced from the fan baffle.
15. The power tool of clause 14, wherein the motor housing comprises at least one opening aligned with the fan baffle, preferably wherein the fan baffle is axially fixed relative to the motor housing via a fixing member extending from the tool housing through the at least one opening.
16. The power tool of clause 15, wherein the fan baffle comprises at least one threaded opening and the at least one fixing member comprises at least one fastener fastened into the at least one threaded opening.
17. The power tool of any one of clauses 14-16, wherein the tool housing comprises at least one through-hole at least partially aligned with the at least one opening of the motor housing and the at least one threaded opening of the fan baffle, preferably wherein the at least one fastener is received through the at least one through-hole of the tool housing and the at least one opening of the motor housing to fixedly secure the motor housing to the tool housing.
18. The power tool of one of clauses 15 or 16, wherein the motor fan is disposed within the motor housing, and preferably wherein the motor housing comprises at least one exhaust vent formed therein proximate the at least one opening and radially aligned with the motor fan.
19. The power tool of one of clauses 11-18, wherein the axial gap is in the range of approximately 0.5 mm to 1.5 mm.
20. The power tool of one of clauses 11-19, further comprising an elastically deformable member mounted between at least a portion of an outer surface of the second end insulator and an inner surface of the motor housing to resiliently support the second end insulator relative to the motor housing.
21. A power tool comprising: a tool housing; an electric motor disposed within the tool housing, wherein the electric motor comprises: a motor housing having a substantially cylindrical body; a stator disposed within the motor housing, the stator including a stator core, a first end insulator mounted to one end of the stator core, a second end insulator mounted to another end of the stator core, and a plurality of stator windings wound around the stator core and the first and second end insulators; a rotor rotatably received within the stator and including a rotor shaft extending along a longitudinal axis and also including a plurality of permanent magnets; a motor fan mounted on the rotor shaft to rotate with the rotor and generate an airflow through the motor housing; and preferably a fan baffle provided between the stator and the motor fan to guide the airflow towards a central portion of the motor fan, preferably wherein the motor housing includes a first opening and the motor housing is securely fastened to the stator via a first fastener passing through the first opening, and preferably wherein the motor housing includes a second opening aligned with the fan baffle, and the fan baffle is fixed to the tool housing via a fixing member passing through the second opening.
22. The power tool of clause 21, wherein the fan baffle comprises a threaded opening, and the fixing member comprises a second fastener passing through the second opening and a corresponding through-hole of the tool housing.
23. The power tool of one of clauses 21 or 22, wherein the first end insulator includes a threaded opening to which the first fastener is fastened.
24. The power tool of one of clauses 21-23, wherein the second end insulator is not fastened directly to the motor housing or the tool housing, so as to be unconstrained along the longitudinal axis and spaced apart from another component fixedly located within the motor housing by an axial gap to account for axial tolerances associated with the stator.
25. The power tool of clause 24, further comprising an elastically deformable member mounted between at least a portion of an outer surface of the second end insulator and an inner surface of the motor housing to support the second end insulator relative to the motor housing.
26. An electric motor comprising: a motor housing having a substantially cylindrical body; a stator disposed within the motor housing, the stator including a stator core, an end insulator mounted to one end of the stator core, and a plurality of stator windings wound around the stator core and the end insulator, wherein the end insulator includes an annular body including an outer diameter that is substantially equal to an outer diameter of the stator core but smaller than an inner diameter of the motor housing, wherein the annular body includes an outer recessed channel; a rotor rotatably received within the stator and including a rotor shaft extending along a longitudinal axis and also including a plurality of permanent magnets; and preferably an elastic element comprising elastically deformable material received at least in the outer recessed channel between the rigid body of the end insulator and the inner surface of the motor housing to resiliently support the stator relative to the motor housing and accommodate for radial tolerances associated with the stator.
27. The electric motor of clause 26, wherein the elastic member is an O-ring that is partially received within the outer recessed channel and partially projecting outside a circumferential boundary formed by the end insulator.
28. The electric motor of clause 27, wherein the annular body of the end insulator comprises a plurality of axial posts in alignment with the plurality of stator windings, preferably wherein the outer recessed channel is formed though an outer surface of at least one of the plurality of axial posts.
29. The electric motor of one of clauses 27 or 28, wherein the outer recessed channel is formed in half of the plurality of axial posts in an alternating arrangement.
30. The electric motor of clause 29, wherein the elastic member passes inwardly of the other half of the plurality of axial posts.
31. A power tool comprising: a housing; an output assembly mounted to the housing; and an electric motor according to clause 26 disposed within the housing and driveably coupled to the output assembly.
32. An electric motor comprising: a motor housing having a substantially cylindrical body; a stator disposed within the motor housing, the stator including a stator core, an end insulator mounted to one end of the stator core, and a plurality of stator windings wound around the stator core and the end insulator, wherein the end insulator includes an annular body including an outer diameter that is substantially equal to an outer diameter of the stator core but smaller than an inner diameter of the motor housing, wherein the annular body includes a first plurality of side openings and a second plurality of openings; a rotor rotatably received within the stator and including a rotor shaft extending along a longitudinal axis and also including a plurality of permanent magnets; a plurality of retaining insert members received into the first plurality of openings, wherein the plurality of retaining insert members include a plurality of threaded openings utilized to securely fasten the motor housing to the end insulator; and preferably a plurality of bumpers received within the second plurality of openings, preferably wherein the plurality of bumpers project radially outward from an outer surface of the end insulator and preferably are pressed into the motor housing to fixedly and/or resiliently support the stator within the motor housing.
33. The electric motor of clause 32, further comprising a bearing bridge mounted to the end insulator and supporting a bearing mounted on the rotor shaft, wherein the plurality of bumpers is pressed against the bearing bridge through the second plurality of openings.
34. The electric motor of clause 33, wherein the bearing bridge comprises a plurality of side projections, and the plurality of bumpers includes a U-shaped profile confirmed to capture the plurality of side projections.
35. The electric motor of one of clauses 32-34, wherein the plurality of bumpers comprises rigid plastic material resiliently pressed in engagement with an inner surface of the motor housing to fixedly support the stator within the motor housing.
36. The electric motor of one of clauses 32-35, wherein the plurality of bumpers comprises elastically deformable material in resiliently deformable engagement with an inner surface of the motor housing to resiliently support the stator within the motor housing.
37. The electric motor of one of clauses 32-36, wherein the plurality of bumpers is configured to maintain an airgap between the outer surface of the end insulator and an inner surface of the motor housing that extends circumferentially around the stator.
38. The electric motor of clause 37, wherein the airgap has a thickness that is in the range of approximately 0.3 mm to 1.3 mm.
39. A power tool comprising: a housing; an output assembly mounted to the housing; and an electric motor according to clause 32 disposed within the housing and driveably coupled to the output assembly.
40. An electric motor comprising: a stator including a stator core forming an annular body and a plurality of stator teeth projecting inwardly from the annular body, an end insulator mounted to one end of the stator core, and a plurality of stator windings wound around the plurality of stator teeth of the stator core and the end insulator; and a rotor rotatably received within to the stator and including a rotor shaft extending along a longitudinal axis and also including a plurality of permanent magnets; wherein the end insulator includes an outer body, a plurality of teeth extending radially inwardly from the outer body forming a plurality of teeth tips corresponding to a shape of the stator core, and preferably a plurality of pins projecting from the plurality of teeth, and preferably wherein the stator core comprises a plurality of holes arranged to receive the plurality of pins of the end insulator.
41. The electric motor of clause 40, wherein the plurality of pins is located proximate the plurality of teeth tips.
42. The electric motor of one of clauses 40 or 41, wherein a diameter of the stator core is smaller than or equal to 34 mm.
43. The electric motor of one of clauses 40-42, wherein the end insulator does not include a wall that projects from the plurality of teeth and penetrates into a plurality of slots of the stator in contact with the plurality of stator teeth.
44. The electric motor of one of clauses 40-43, wherein the plurality of teeth of the end insulator is laterally and/or rotationally fixed relative to the plurality of stator teeth via the plurality of pins.
45. The electric motor of one of clauses 40-44, further comprising a motor housing having a substantially cylindrical body, wherein the stator is securely received within the motor housing.
46. The electric motor of one of clauses 40-45, wherein the plurality of pins is located substantially centric to the plurality of teeth of the end insulator in a lateral direction of the plurality of teeth.
47. The electric motor of one of clauses 40-46, wherein the stator core is formed from a plurality of laminated steel members, wherein at least one of the plurality of lamination steel members is provided with the plurality of holes, and at least one of the plurality of laminated steel members is provided without the plurality of holes.
48. The electric motor of one of clauses 40-47, wherein a heigh of the plurality of pins is approximately 0.5 mm to 1.5 mm.
49. A power tool comprising:
   a housing; an output assembly mounted to the housing; and an electric motor according to clause 40 disposed within the housing and driveably coupled to the output assembly.
50. An electric motor comprising: a stator including a stator core, a plurality of stator windings, and a routing insulator provided at an axial end of the stator core to electrically insulate the stator core from the plurality of stator windings; a rotor rotatably received within the stator and including a rotor shaft extending along a longitudinal axis and also including a plurality of permanent magnets; and a plurality of stator terminals supported by the routing insulator and extending away from the stator, each stator terminal including a main body, a tang portion folded over the main body and receiving a cross-over portion of a magnet wire therein to make an electrical connection with at least one of the stator windings, and a terminal pin projecting away, preferably axially away, from the stator core; preferably wherein the routing insulator includes, corresponding to each of the plurality of stator terminals, a wire guide portion formed by two end surfaces thereof forming a recessed portion therebetween, preferably wherein the recessed portion is aligned with the tang portion of the stator terminal, and the two end surfaces are oriented relative to the tang portion so as to guide the magnet wire into contact with an inner loop of the tang portion.
51. The electric motor of clause 50, wherein the tang portion is at least partially received within the recessed portion.
52. The electric motor of one of clauses 50 or 51, wherein the two end surfaces are arcuate shaped.
53. The electric motor of clause 52, wherein the two end surfaces are oriented substantially along an arcuate profile that passes through the tang portion, wherein the cross-over portion of the magnet wire is substantially guided along the arcuate profile.
54. The electric motor of clause 52, wherein a portion of the tang portion that is folded over the main body is located on a side of the inner loop of the tang portion opposite the recessed portion.
55. The electric motor of one of clauses 50-54, wherein the tang portion does not project radially beyond an outer surface of the routing insulator.
56. The electric motor of one of clauses 50-55, wherein the routing insulator comprises a plurality of support posts extending axially away from the stator to support the plurality of stator terminals, wherein the plurality of support posts is located radially inward of the wire guide portion.
57. The electric motor of clause 56, wherein the plurality of support posts includes, corresponding to each of the plurality of stator terminals, two support arms arranged to securely receive side portions of the stator terminal therein, wherein the two support arms are located in axial alignment with the two end surfaces of the wire guide portion but radially inward of the outer surface of the routing insulator.
58. A power tool comprising: a housing; an output assembly mounted to the housing; and an electric motor according to clause 50 disposed within the housing and driveably coupled to the output assembly.

## Claims

1. An electric motor, comprising:
a motor housing having a substantially cylindrical body;
a stator disposed within the motor housing, the stator including a stator core, a first end insulator mounted to one end of the stator core, a second end insulator mounted to another end of the stator core, and a plurality of stator windings wound around the stator core and the first and second end insulators; and
a rotor rotatably received within the stator and including a rotor shaft extending along a longitudinal axis and also including a plurality of permanent magnets;
wherein the motor housing is fastened to the first end insulator via at least one fastener received in a threaded opening of the first end insulator, and the second end insulator is not fastened directly to the motor housing, so as to be unconstrained along the longitudinal axis relative to the motor housing to accommodate axial tolerances associated with the stator.

2. An electric motor according to Claim 1, wherein the second end insulator is spaced apart from another component fixedly located within the motor housing by an axial gap.

3. An electric motor according to Claim 2, further comprising a flexible compliant member located within the axial gap.

4. An electric motor according to any preceding claim, further comprising a circuit board mounted on a rear portion of the motor housing and electrically coupled to the plurality of stator windings.

5. An electric motor according to Claim 4, wherein the first end insulator is located proximate the circuit board.

6. An electric motor according to any preceding claim, further comprising a motor fan mounted on the rotor shaft to rotate with the rotor and generate an airflow through the motor housing.

7. An electric motor according to Claim 6, further comprising a fan baffle provided between the stator and the motor fan to guide the airflow towards a central portion of the motor fan.

8. An electric motor according to Claim 7, wherein the fan baffle is axially fixed relative to the motor housing, and the second end insulator is axially spaced from the fan baffle.

9. An electric motor according to Claim 7 or Claim 8, wherein the motor housing comprises at least one opening aligned with the fan baffle, wherein the fan baffle is axially fixed relative to the motor housing via a fixing member received through the at least one opening.

10. An electric motor according to claim 9, wherein the fan baffle comprises at least one threaded opening, and the at least one fixing member comprises at least one fastener fastened into the at least one threaded opening.

11. An electric motor according to Claim 9 or Claim 10, wherein the motor fan is disposed within the motor housing, and preferably wherein the motor housing comprises at least one exhaust vent formed therein proximate the at least one opening and radially aligned with the motor fan.

12. An electric motor according to Claim 2 or any claim dependent thereon, wherein the axial gap is in the range of approximately 0.5 mm to 1.5 mm.

13. An electric motor according to any preceding claim, further comprising an elastically deformable member mounted between at least a portion of an outer surface of the second end insulator and an inner surface of the motor housing to resiliently support the second end insulator relative to the motor housing.

14. A power tool, comprising a tool housing, and an electric motor according to any preceding claim disposed within the tool housing.

15. A power tool according to Claim 14 when dependent on Claim 10, wherein the tool housing comprises at least one through-hole at least partially aligned with the at least one opening of the motor housing and the at least one threaded opening of the fan baffle, wherein the at least one fastener is received through the at least one through-hole of the tool housing and the at least one opening of the motor housing to fixedly secure the motor housing to the tool housing.
